Europäisches Patentamt

European Patent Office

Office européen des brevets

(19)

(11) Publication number: **0 081 563**
**B1**

(12) **EUROPEAN PATENT SPECIFICATION**

(45) Date of publication of patent specification: **29.10.86**

(21) Application number: **82902123.7**

(22) Date of filing: **24.05.82**

(86) International application number:
**PCT/US82/00702**

(87) International publication number:
**WO 82/04247 09.12.82 Gazette 82/29**

(51) Int. Cl.⁴: **C 03 B 5/225, C 03 B 5/235**

(54) **DIRECTED FLOW, THIN LAYER GLASS FUSION.**

(30) Priority: **04.06.81 US 270330**

(43) Date of publication of application:
**22.06.83 Bulletin 83/25**

(45) Publication of the grant of the patent:
**29.10.86 Bulletin 86/44**

(84) Designated Contracting States:
**AT BE CH DE FR GB LI LU NL SE**

(56) References cited:
**US-A-1 575 514**
**US-A-4 023 976**
**US-A-4 238 217**

(73) Proprietor: **PQ Corporation**
**Valley Forge Executive Mall P.O. Box 840**
**Valley Forge, PA 19482 (US)**

(72) Inventor: **ALEXANDER, John M.**
**Smoke Road R.D. 4**
**Doylestown, PA 18901 (US)**
Inventor: **PATTENGILL, Maurice G.**
**601 Virginia Street**
**Golden, CO 80401 (US)**
Inventor: **BAUER, William C.**
**175 Cordova Court**
**Boulder, CO 80303 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

EP 0 081 563 B1

## Description

This invention generally relates to the preparation of soluble and insoluble glasses and particularly a directed flow, thin-layer glass fusion process. This process constitutes an integrated energy-efficient method for producing silicate glasses.

Herein the terms "glass" or "insoluble glass" will be applied to the familiar insoluble materials, while the term "soluble glass" or "soluble silicate glass" will be applied to those materials that consist of alkali metal and silica and are dissolved to form the commercial class of materials known as silicates.

Soluble and insoluble silicate glasses are formed by the fusion of glass-forming materials in a furnace or hearth which is commonly called a glass tank. The raw materials are charged to the furnace heated to a temperature above the initial fusion point of the glass batch raw materials to form a molten bath. Such raw materials are generally referred to as "batch" and the "batch" ingredients common to most glasses are sodium carbonate (soda ash) and a source of silica such as sand. Other widely used ingredients primarily used in the production of insoluble glasses include: lime, limestone, borax, potash, alumina and salt cake. The "batch" is charged to the furnace and floats on the molten glass bath until it melts and reacts to become part of the bath which is eventually drawn from the furnace as the product. This process has been practiced for over 100 years, and is still widely used despite numerous shortcomings.

The usual glass-making furnaces are exceedingly energy-intensive and, indeed, inefficient. These glass furnaces are usually large refractory structures, so that the heat lost to the walls is considerable. Insulation possibilities are limited, since operation of the furnace is by thermal convection in the molten bath, said convection currents being generated by hot and cold spots in the furnace. The "batch" floating on the molten glass is almost a perfect insulator, which prevents rapid heat transfer to the molten glass. The glass must have a considerable residence time in the furnace to achieve homogeneity. This increased holding time also requires more energy. Indeed, these heat requirements and losses are such that it is conventionally assumed that only about 1/3 of the energy consumed in a glass furnace is directed to forming glass.

In recent years, some attempts have been made to improve this process and the manner in which heat is utilized. In general these attempts involve agglomerating the "batch" in some manner and then pre-heating these materials before charging them to the furnace. US—A—3,542,534; 3,607,190; 3,726,697; 3,788,832; 3,953,190; 4,023,976; 4,045,197 and 4,135,904 among others disclose various means for attempting to increase the efficiency of the glass-making process. These techniques can achieve some increased heat utilization since furnace combustion gases are used as a source of heat. However, the benefits of these processes are minimal since the conventional inefficient glass furnace with a molten glass bath of substantial depth is still the means of forming a molten glass.

It is an object of this invention to provide a new, more energy-efficient process for reacting and melting glass "batch" to form molten glass. It is a further object of the invention to provide a directed flow, thin layer reaction process that does not involve a molten glass bath of significant depth, does not require convection currents to achieve accelerated melting rates and does not require a large furnace. It is an additional objective of the invention that the process requires substantially less fuel to be burned in the furnace and as much of the heat so produced be utilized as is practical.

According to the present invention these objects are achieved by a directed flow, thin-layer glass fusion process comprising the steps of:

(a) blending particulate glassmaking raw materials to form a homogeneous mixture, at least one of said raw materials having a cation-to-oxygen bond strength greater than 80 kcal/mole;

(b) forming said mixture into discrete compacted bodies of enduring homogeneous character;

(c) heating said bodies at a temperature and for a period of time sufficient to raise their temperature significantly while avoiding surface melting or sticking;

(d) charging the discrete heated bodies to a breakdown area of a refractory hearth in a furnace, said hearth being heated by a source of radiant energy, said bodies resting upon the refractories comprising the hearth, the temperature within the furnace being sufficient to cause the discrete bodies to lose morphology in less than 15 minutes by forming a molten phase, said hearth and breakdown area being so constructed that the molten material forms a thin layer flowing in a direction away from the breakdown area to a melt-direction area, said molten phase wetting any unmelted unreacted raw material so that it is carried by said flow, thereby maintaining homogeneity;

(e) heating the melt-reaction area of the hearth with a source of radiant energy, and maintaining the conditions such that a portion of the radiant energy is transmitted through the flowing molten thin layer to heat the underlying refractory hearth, so that the said thin layer absorbs heat from the hearth refractories in addition to absorbing radiant energy to complete melting and reacting, thereby forming a molten glass; and

(f) recovering the molten glass by drawing it from the hearth, the period of residence in the hearth being sufficient to accomplish essentially complete reaction of the raw materials.

Preheated or preheated-prereacted discrete bodies of glass "batch" are charged onto a refractory hearth which is heated to a temperature substantially above the temperature at which the glass product becomes fluid; the structure of the hearth and the reaction conditions therein are such that the molten, reacting material flows away from the breakdown area in a thin layer. The flowing glass reacts further and flows off the hearth as product.

The raw materials are blended and then agglomerated to overcome many of the problems associated with the use of loose batch materials. Blending establishes chemical homogeneity of the batch while agglomerating assures that homogeneity is maintained throughout the process. The agglomerating procedure also compresses or compacts the batch materials with the resultant discrete bodies having increased density and heat conductivity. These effects lead to more efficient utilization of heat when the discrete bodies are heated before charging to the hearth. They can be simply heated to a temperature several hundred degrees below the temperature at which there is surface sticking; or they can be heated to a temperature just below the surface sticking temperature, inducing a significant amount of solid state prereaction, the amount of said prereaction being dependent on the time the bodies are at the temperature. Heating the discrete bodies should not induce surface melting resulting in sticking.

The preheated discrete bodies are introduced onto the hearth and at least partially melted in the breakdown area, at a temperature considerably above that which causes the product glass to be a fluid. The breakdown area is not continuously covered. Those portions of the hearth that are not covered will be heated by direct flame radiation and reradiation from the sidewalls and crown. With the hearth being heated in this manner, the discrete bodies are heated by direct flame radiation, reradiation and conduction from the hearth. The discrete bodies heat uniformly, form a liquid phase and lose their morphology. The liquid phase wets any solid unreacted or unmelted materials, usually silica, that remain, and as the liquid flows away from the breakdown zone these solids are carried with them, thereby maintaining the homogeneity required by our process.

As the reacting material flows into and through the melt-reaction zone, it becomes more completely reacted and transparent to radiant energy. Heat transfer to the refractory hearth is efficient and the area may be completely covered with a viscous layer of glass. The temperature in this zone may be lower than in the breakdown area. This area of the hearth is of sufficient length to allow completely reacted glass to be drawn from the furnace. The time required for the complete fusion reaction on the hearth is only a fraction of the time required in a conventional molten-bath glass furnace, i.e., minutes vs. hours.

The advantages and improvements realized by practicing the glass-making process of our invention are substantial. The preheating or prereacting of the agglomerated discrete bodies allows waste heat streams to be utilized; the combustion gases from xhe furnace can provide most or all of the heat required. The homogeneity and quick melting of the preheated briquettes allow very high production rates to be realized from our relatively small energy-efficient furnace. The directed flow thin layer does not require convection currents induced by thermal gradients so that the hearth structure can be effectively insulated, accruing further fuel savings. The directed flow hearth also leads to savings on refractory cost. The total size of the production facility is drastically reduced since the hearth size is very small. In addition the refractory material exposed to extreme heat and very corrosive incompletely reacted molten soda ash is very limited, with resultant further savings in replacement refractories and the labor required for rebuilding. Probably the most important advantage realized from the process of our invention is superior process control over every aspect of the production of molten glass. Composition and homogeneity of the batch are controlled and maintained by blending and briquetting said batch. The uniform briquettes can be characterized mathematically for reaction and heating rates. The preheating and/or prereaction of the briquettes are controlled by time of heating and the temperature of the gas employed. The melting or reaction rate is controllable by the extent of preheating and firing temperatures. All of these conditions can be controlled by state-of-the-art microprocessor systems. Prior-art regenerative glass-making furnaces cannot be controlled as effectively. Other advantages, advances in the art, and capital savings will become apparent in the full description of the invention and in the examples.

The first steps in the process of our invention comprise mixing and agglomerating the raw material "batch" in some fashion. Said "batch" may contain numerous components of fine particle size if an insoluble glass is the product, or may be a simple two-component system if a soluble silicate is the product. The insoluble glasses may be, for example, soda lime, borosilicate, aluminosilicate or lead glasses. Raw materials commonly used in glassmaking include lime, soda ash, sand, silica flour, borax, feldspar, nepheline syenite, magnesium carbonate, potassium carbonate, iron oxide, dolomite, sodium hydroxide, potassium hydroxide, potash, fluorspar, barium carbonate, limestone, alumina, salt cake (sodium sulfate), gypsum and other equivalent materials.

Essentially any material that is needed in making glasses including glass network formers, modifiers and intermediate glass formers can be advantageously processed by the method of our invention. Glass network formers are those materials that form the backbone structure of the glass and exhibit cation-to-oxygen bond strengths greater than 80 kcal/mol. Examples of these materials include, among others:

| | |
|---|---|
| $SiO_2$ | $Sb_2O_3$ |
| $B_2O_3$ | $Sb_2O_5$ |
| $P_2O_5$ | $Al^{(IV)}{}_2O_3$ (coordination |
| $P_2O_3$ | number of Al is 4) |

Modifiers are those glassmaking ingredients which do not form networks, but interrupt the structure and change the properties of the product. Examples of these materials include, among others, $Na_2O$, $K_2O$, $Li_2O$, $Rb_2O$, $SnO_2$, $PbO_2$, $MgO$, $PbO$, $BaO$ and $CaO$. Intermediate materials are those materials that have some network forming capacity or may act as modifiers depending on conditions including the other ingredients, coordination number and the like. Examples include, among others, $TiO_2$, $ZnO$, $PbO$, $Al^{(VI)}{}_2O_3$ (coordination number of 6) and $ZrO_2$. Our raw materials then must contain at least one ingredient that has a cation-to-oxygen bond strength of 80 kcal/mol and whatever modifiers and/or intermediate compounds are required to produce the desired product glass. Glasses and their preparation are discussed in various publications including: Boyd and Thompson, "Glass," *Encyclopedia of Chemical Technology*, 3rd Edition, Wiley-Interscience (New York: 1980), Volume 11, pp. 807—855; Pye, Stevens and LaCourse, Eds., *Introduction to Glass Science*, Plenum Press (New York: 1972); and Tooley, Ed., *The Handbook of Glass Manufacture*, Books for Industry, Inc. (New York: 1974). These publications are incorporated herein by reference as disclosing glasses that can be prepared according to the teachings of our invention, their raw materials and compositions.

Another raw material that can be used in the process of our invention is cullet. Many glasses require the inclusion of cullet or previously fused glass to provide processing advantages. Up to about 60% or more cullet can be accommodated in our process, and this material can be added in several ways. The cullet can be ground and added to the "batch" before blending and agglomerating. The discrete bodies of cullet can be mixed with discrete bodies of "batch" and preheated before introduction to the hearth. Discrete bodies of cullet can also be added to the hearth in a separate feed system that can be preheated. They can also be added without heating.

Soluble alkali metal silicate glasses are formed by the fusion of a source of alkali metal and silica, usually an alkali metal carbonate and sand. For example, sodium silicate is usually formed by fusing sand and soda ash. The composition of such glasses is given by the mole ratio of $SiO_2/M_2O$ wherein M represents an alkali metal, usually sodium and/or potassium. Such glasses that contain 0.9 to 5.0 moles of $SiO_2$ per mole of $M_2O$ are prepared by the process of our invention. We prefer to prepare glasses that contain 1.5 to 4.5 moles of $SiO_2$ per mole of $M_2O$.

Even the simplest of these raw material "batches" consists of materials of different particle size and density. A number of processing problems have been associated with these physical characteristics in the past. Some of the ingredients can be entrained in the combustion gases resulting in plugging and/or eroding various furnace structures. Most importantly, homogeneity has been very difficult to maintain throughout batch preparation and the reaction. As a result of this difficulty, high fusion temperatures and/or long melting and refining steps are necessary to provide good product. Accordingly, the characteristics of loose "batch" completely prevent its use in our process.

Our process requires that the "batch" materials be blended to provide a homogeneous mixture. This mixture must be agglomerated to fix and maintain homogeneity and to provide other properties. In our process agglomerating is not considered to be the mere consolidation of small particles to form larger particles. We intend that agglomerating be construed to mean any method of forming the "batch" into compacted discrete bodies of uniform and enduring composition, size, shape and density. Such discrete bodies have uniform properties which can be mathematically described, such as pressure drop in a column of the bodies, mass flow rate, and convective and radiation heat transfer characteristics. These uniform properties and their mathematical description allow design of an extremely energy-efficient system. We consider agglomerating to include extruding, pelletizing, tabletting, briquetting, forming sheets or ribbons to be cut or broken, and similar processes.

The production and processing of briquettes appear to be very convenient, and we prefer to prepare and use pillow-shaped briquettes. Such briquettes have exhibited good handling characteristics, and columns of said briquettes exhibit acceptable pressure drops to flowing gas streams. Our briquetting step is carried out by mixing the raw material "batch", which is then blended with a liquid binder, and compacting the mixture in a suitable mold using sufficient pressure to provide a cohesive structure. The binder can be any liquid that provides or induces tackiness to the "batch" without adding undesirable matter to the product. A solution of any soluble glassmaking component is generally suitable, as are oils and the like which burn off completely during fusion. Examples of useful binders include water, alkali metal hydroxide solutions, alkali metal carbonate solutions and alkali metal silicate solutions.

The amount of binder required varies with the "batch" composition, the pressure used during compaction, the density and strength desired, and the binder being used. For discrete bodies being used in our process 3 to 18 parts by weight (pbw) of binder can be used for 100 pbw of batch). The pressure used to produce the discrete bodies required by the process of our invention depends upon the type of agglomerating process and compositional variables. The minimum pressure required is that which forms discrete bodies with sufficient strength to be handled. This pressure should not be so intense that the discrete bodies

exhibit "rebound"—splitting from being compressed too strongly. This mixture can be compressed or compacted at 34.4 to 2063 bar (500 to 30,000 psi) to form the discrete bodies required by our process. In any case, the bodies must have sufficient strength to be handled, or a compressive strength above about 1.4 bar (20 psi) for small bodies of about 25 g. Larger bodies of 85 to 90 g should have compressive strength above about 6.2 bar (90 psi). The discrete bodies should be free-flowing and stable; they can be used at once or stored and used at some later time. We prefer to use briquettes made in a roll briquetter, the roll separating pressure being about 34.4 to 206.3 bar (500 to 3,000 psi) and the actual forming pressure being 68.8 to 687.5 bar (1,000 to 10,000 psi).

In our process the "briquetted" batch is charged to a preheater which is positioned over a portion of the directed flow hearth. The preheater could be located elsewhere and the briquettes transferred to the hearth by a conveyor or the like, but there are structural and processing advantages to our preferred position. The preheater is built of heat- and abrasion-resistant materials to contain a column of briquettes and to provide a counter-current flow of a gas at elevated temperatures through said briquette column. The temperature of the gas and the residence time in the column should not induce surface melting the sticking of the briquette pile. The briquettes can be heated to a temperature at which there is surface sticking, with the briquettes being charged to the hearth when they attain the desired temperature. Alternatively, the briquettes can be heated up to a temperature 28 to 56°C (50 to 100°F) below the temperature at which there is surface sticking and then held at that temperature for a period of time sufficient to achieve up to 60% reaction of the raw materials. In some glasses the reaction can be carried out completely without deforming the briquette. The gas used to provide this elevated temperature is usually 28 to 111°C (50 to 200°F) below the temperature at which there is surface sticking. The high temperature gas can be from any source, but a preferred source would be the combustion products from the furnace, which are convenient and provide economic advantage.

The preheater and/or prereactor must have several characteristics to be useful in our process. The briquettes must be discharged freely from the preheater and fall randomly onto the directed flow hearth, but this must be accomplished without exposure of the heated portion of the briquette pile to radiant energy from the hearth. Additional heat extracted from this radiation can cause surface fusion among these briquettes. The size of the preheater should be sufficient to allow the briquette depth to be adjusted to extract all the usable heat from the hot gases that enter the briquette column. However, the temperature of the preheater off-gases should not be reduced below the dew point of the combustion products.

The directed flow, thin layer hearth must include several structural and operational features to be used in our process. The hearth must incorporate means to direct the flow of at least partially melted briquettes from the initial portion of the hearth that we call the breakdown zone, through the melt-reaction zone to the discharge port. The most common means of directing said flow is to slope the hearth downward from the briquette receiving area to the discharge port. A mechanical pusher, among other devices, can also be useful in achieving the desired flow. While the velocity of said directed flow is influenced by a number of factors, it must be sufficient to entrain any unmelted, unreacted solids. If such materials are not entrained, homogeneity is not maintained and the desired product glass is not produced. In addition, the unreacted solids would build up and disrupt the flow on the hearth.

There are two zones in the directed-flow hearth as employed in our process. The initial briquette breakdown zone and the subsequent melt-reaction zone need not be physically separated, although each has specific requirements. Both zones of the hearth may be heated in the same way, and any convenient means may be employed to do so. As an example, side or crown-fired oil or gas burners may be used.

The conditions maintained within the briquette breakdown zone, which comprises 10 to 80% of the hearth area, must be maintained to promote rapid heating and at least partial melting of the freshly charged briquettes. To achieve rapid heating and loss of morphology, direct heating of the refractory hearth is necessary, since heat transfer from the hot refractories to the briquettes is efficient. The briquettes and partially unreacted batch materials are opaque to radiation and do not transmit heat to the hearth; therefore it is necessary that part of the refractory hearth be free of heat-absorbing materials and able to absorb radiant energy from the combustion of fuel and reradiation from the furnace and hearth super-structure. Accordingly, the briquettes should be randomly charged to the hearth and should not form piles. A discontinuous layer of single briquettes covering 40 to 90% of the breakdown zone is preferred. About 10 to 60% of the area of the breakdown zone should be free of the briquettes and available to absorb radiant energy at all times during charging of the hearth. The briquette feed rate and pattern should be adjusted to achieve this result. The temperature in the breakdown zone is controlled at 315 to 538°C (600 to 1000°F) above the temperature required to produce a fluid, flowing product glass thereby promoting the required rapid heating and partial melting of the briquettes. The briquettes should lose their morphology in less than about 15 minutes.

The partially melted, partially reacted material flows from the breakdown zone to the melt-reaction zone which comprises 20 to 90% of the hearth area. This zone may be heated at the same temperature as the breakdown zone or the temperature may be 204 to 315°C (400 to 600°F) above the temperature required to produce a fluid, flowing product glass. The refractory hearth can be completely covered with the flowing molten glass, since in this state it is transparent to radiation and the refractories are heated by radiation through the glass. In this area, melting and reaction of the raw materials to form the product glass are completed or largely completed. The homogeneity maintained throughout the reaction allows some molten glasses to be drawn from this zone as product without refining. Glasses that require long reaction times and/or special refining can be drawn into a holding tank for that period.

Each glass prepared by our process requires modification of temperatures, size of various areas of the furnace and other reaction conditions. In spite of these differences it is possible to describe the events of the process. The briquette is prepared from the mixed and blended raw material "batch" and then charged to the preheater. The gas rising through the briquette pile heats and dries the briquette. As the briquette progresses down the column it contacts progressively hotter gases and absorbs heat uniformly throughout the compacted material. At the bottom of the column the briquette comes in contact with the highest temperature gases, and it is in this region that the majority of the solid-state prereaction takes place. The preheated or prereacted briquette is charged to the high-temperature breakdown zone of the furnace, and the resultant liquid phase wets any residual unreacted solids and as the material flows from the breakdown zone to the melt-reaction zone these solids are entrained. There is no buildup of unreacted materials in the breakdown zone. In the melt-reaction zone, further reaction and dissolution of the remaining solids takes place to form the molten glass desired. If the product requires no refining it can be drawn directly from the hearth.

A most important result of carrying out the glass fusion process according to the method of our invention is that the opportunities for efficient heat transfer to the glass-making ingredients are greatly increased. In a conventional glass furnace or "glass tank", heat transfer and utilization are adversely affected by many factors such as the insulating nature of the batch, the low surface-to-volume ratio of the molten glass bath as well as the unreacted batch, the need to heat and maintain massive amounts of refractories and operation · in a non-steady-state condition required by reversal of flame direction to use the heat recovered by the regenerators. In contrast, the process of our invention is a steady-state operation that can be controlled to produce advantageous results. The briquetted "batch" has a predetermined and predictable pressure drop for the hot gas flowing up the column and has a favorable area-to-volume ratio for absorbing heat from the gas when compared with a pile of loose "batch" which exhibits neither of these qualities.

In addition, the briquettes heat uniformly before any reaction takes place, while in loose batch a relatively thin surface zone absorbs heat and undergoes reaction before further heat transfer is possible. In the breakdown zone the briquettes absorb heat from the heated refractories as well as the hot gaseous products of combustion. In conventional glass furnaces the batch or partially reacted batch has virtually no opportunity to absorb heat by conduction from the refractories. The thin layer of flowing molten material in the melt-reaction zone also has a favorable surface-to-volume ratio when compared to a deep molten bath. Additionally, this layer is transparent to radiant energy so that the refractories on which the glass flows are heated, and heat transfer from the refractories augments that from the hot combustion gases. The depth of the molten glass layer flowing in the melt-reaction zone is dependent upon several factors. It must be thin enough to allow efficient radiant energy transfer to the refractories while thick enough to allow substantial production rates.

The most detailed description of our invention is in terms of the process required to produce a soluble sodium silicate glass, but it should be understood that while reaction conditions may vary for different types of glasses the main process steps and results are the same for all such preparations.

The raw materials used to prepare soluble sodium silicate glass are commonly sodium carbonate and sand. These raw materials, which are of small particle size, are combined in amounts that provide 0.9 to 4.5 moles of $SiO_2$ per mole of $Na_2O$. The raw materials are weighed to provide the correct compositions and blended in any convenient manner such as by a twin shell, zig-zag or turbine blender. The blend of raw materials is mixed with an aqueous binder. A sodium silicate solution that contains 1.0 to 35% by weight of silicate solids ($Na_2O+SiO_2$) is useful for this purpose. We prefer that the silicate solution contain 1.5 to 10% silicate solids. Sufficient binder is used to provide a mixture that contains 1.0 to 12% water and up to 5% silicate solids. The amount and composition of the binder can be varied considerably as long as the resulting briquettes have sufficient initial strength to be handled. We prefer the mixture to contain 3.5 to 9% water and 0 to 2% silicate solids. The dampened mixture is compressed in a roll briquetter at roll separating pressures between 34.4 to 82.5 bar (500 and 1200 psi) to provide the desired briquettes. These roll pressures translate to about 137.5 to 343.8 bar (2000 to 5000 psi) of actual forming pressure in the mold cavities. The material should be compressed within 3 minutes after the dampened mixture is prepared. If more than 3 minutes elapse, the strength of the briquettes is substantially diminished. We prefer to compress the dampened batch immediately (less than about 1.5 min) to obtain acceptable strength with minimum binder addition.

The compressed material is screened, with the undersize material being recycled. The product briquettes are free-flowing and can be handled with the usual type of conveying equipment. They can be stored, shipped to other locations or used at once. To be used, the briquettes are charged to a preheater which is preferably positioned over and feeds the briquette breakdown area of the hearth. The preheater for the briquettes is constructed of super-duty firebrick or similar structural material and is essentially a container for a column of briquettes which progressively advances from the top of the structure to the bottom. A stream of high-temperature gas, usually diluted products of combustion, is passed counter-current to the briquette flow, thereby heating the briquettes. While we prefer to use the waste gases from the combustion of fuel used to heat the furnace, this gas cannot be drawn directly from the furnace because the temperature would be too high and surface melting of the briquettes would result. Instead, the furnace gases are reduced in temperature by preheating the combustion air, and/or diluting to the desired temperature with ambient air. The temperature of the gas directed into the briquette column and used to heat the briquettes varies with the composition of the glass produced, but should be slightly below the temperature that produces surface sticking. For the soluble silicate glasses of the present description this temperature is about 704 to 843°C (1300 to 1550°F). Other glasses have different requirements, and they are discussed where appropriate. The briquettes are heated to progressively higher temperatures as they have from the top of the column to the bottom. The briquettes can be heated to any temperature required for the process as long as it is below the point of surface sticking. Good results can be obtained by heating the briquettes to a temperature 50 to 900°F below the temperature that produces surface sticking. We prefer to heat briquettes for soluble glass production to temperatures between 449 and 788°C (840 and 1450°F). If the briquettes remain in the preheater for only enough time to attain the desired temperature, little solid state prereaction is achieved. However, if the briquettes are retained in the preheater longer, more solid state reaction takes place. Soluble glasses can be held for up to 5 hours at about 732 to 843°C (1350 to 1550°F) to achieve a prereaction of 35% or higher.

The preheated or prereacted briquettes are charged to the breakdown area of the hearth which is fired at 1204 to 1482°C (2200 to 2700°F). The briquettes fall on the refractory hearth, are heated by absorbing radiation from the combustion of fuel, reradiation from the refractory super-structure, and by conduction from the refractory hearth, and begin to melt almost immediately. Morphology is lost in 3 minutes or less, and the molten portion begins to flow. The hearth is sloped downward from the breakdown zone. As the molten material flows, it wets and entrains any unreacted silica so that homogeneity is maintained. This silica reacts as the flow progresses and the melt becomes more transparent to radiation, allowing the refractory hearth to continue receiving radiated heat. As the material flows, any remaining silica reacts and the desired product is formed. The total time from charging of the preheated briquettes to the hearth and drawing the molten glass depends upon glass composition, temperature of briquette preheating, temperature of the hearth, and slope of the hearth. This time must be sufficient for at least 98% of the raw materials (especially silica) in the composition to be reacted. We have found that this period can be less than about 30 minutes for silica-rich glass (more than 2.5 moles of $SiO_2$ per mole of $Na_2O$) and less than about 20 min for more alkaline glasses. Some compositions require less than 15 min while others may require less than 10 min.

The depth of the flowing glass layer depends upon a number of factors such as the temperature and composition of the flowing glass, the slope of the hearth and the production rate. The molten product depth varies up to about 2.0 inches.

Production of insoluble glasses requires some changes in the detailed process used to produce soluble sodium silicate. Batching, blending and the binder must be adjusted to provide for more numerous ingredients, for example, a soda-lime glass used for windows requires four ingredients while a borosilicate glass used for laboratory ware requires 9 ingredients. Blending must be controlled so that mixing is complete but so that demixing does not occur. The binder solution can be water or silicate solution, and for such insoluble glasses we prefer that the dampened mixture contain 3 to 5% water and up to 3% silicate solids.

The dampened batch should be compressed and briquetted within about 5 minutes and the roll separating pressures should correspond to actual forming pressures of 137.5 to 206.3 bar (2000 to 3000 psi). The briquettes are charged to the preheater and heated with gases that are somewhat higher in temperature than for soluble silicate production since surface sticking is induced at somewhat higher temperatures. The gas can have a temperature up to 927°C (1700°F) and briquettes can be 449 to 899°C (840 to 1650°F) on charging. The temperatures that can be used in the hearth are the same as those required for the soluble glasses. These insoluble silicate glasses are relatively richer in silica and require up to 45 minutes in the hearth between charging of the briquettes and drawing the product.

Glasses that require a considerable amount of refining can be processed on a longer hearth or more conveniently placed in a heated holding tank. Even this refining time is reduced from the prior art since the melt is inherently homogeneous. Examples of insoluble glasses that can be processed according to the teachings of our invention include among others:

| Soda-lime or lead oxide glasses | | | |
|---|---|---|---|
| Windows | | Light bulbs | |
| Oxide | (% wt/wt) | Oxide | (% wt/wt) |
| $SiO_2$ | 68—78 | $SiO_2$ | 65—80 |
| $Al_2O_3$ | 0.2—3 | $Al_2O_3$ | 0—2 |
| CaO | 6—16 | CaO | 0—6 |
| MgO | 0—5 | MgO | 0—6 |
| $Na_2O$ | 10—20 | PbO | 0—9 |
| | | BaO | 0—9 |
| | | $Na_2O$ | 0—20 |
| | | $K_2O$ | 0—22 |

| Borosilicate glasses | | | |
|---|---|---|---|
| Heat resistant | | Laboratory ware | |
| Oxides | (% wt/wt) | Oxide | (% wt/wt) |
| $SiO_2$ | 70—82 | $SiO_2$ | 63—83 |
| $Al_2O_3$ | 0.5—4 | $Al_2O_3$ | 1—5.5 |
| CaO | 0—7.5 | CaO | 0.1—10 |
| MgO | 0—1 | MgO | 0.1—4 |
| $Na_2O$ | 4—17 | ZnO | 0—13 |
| $B_2O_3$ | 1—20 | $B_2O_3$ | 6—14 |
| $As_2O_3$ | 0—4 | $Na_2O$ | 2.5—13 |
| | | $K_2O$ | 0.5—10 |
| | | $As_2O_5$ | 0—1 |

While the main elements of our process are always the same, certain embodiments of our invention require that the reaction conditions be established differently. For example, the combustion gases must be treated differently if a substantially prereacted briquette is to be charged to the hearth rather than a simply preheated briquette. The following steps would be required if only preheated briquettes were desired. Combustion gases would be pulled from the furnace at about the furnace temperature. These gases might be diluted before entering, but generally enter directly, a metallic recuperator for preheating the combustion air. If desired, a conventional regenerator can be used as well. The off-gases from the recuperator are then used to heat the briquettes.

If a significant amount of prereaction is desired, the sequence of steps is somewhat different. The combustion products are drawn from the furnace and diluted to provide the mass of high-temperature gas required to prereact the briquettes. This hot gas is drawn through the briquettes to heat and prereact them, and it exits the briquette column at a still high temperature (only 300 to 400°F less than the entering gas) and is passed through a large heat exchanger to heat the combustion air.

The soluble silicate glasses contained from the process of our invention are comparable in all respects to commercially available glass prepared in the traditional manner. Insoluble glasses prepared by our process are also comparable to commercially available material.

Examples

The following examples illustrate certain embodiments of our invention. Illustrations of conventional preparations are also included to provide comparisons. We do not consider that these examples illustrate the full scope of our invention, said scope being fully discussed in the disclosure and recited in the claims. All proportions are by weight, such as percent by weight (%), unless otherwise indicated.

Example 1

This example illustrates the production of sodium silicate glass (2.40 $SiO_2$/$Na_2O$) by the prior-art method. A furnace with a bath area of 34.8 m² (375 ft²) was charged with 59 batches of sand and soda ash per 8-hour shift. Each batch contained 372 kg (820 lb) of sand and 260 kg (575 lb) of soda ash. The crown temperature was about 1370°C or 2500°F. When the glass was drawn, white lumps were seen in the molten glass stream. These lumps were found to consist of unreacted sand and/or glass of very high $SiO_2$/$Na_2O$ ratio and were insoluble. The furnace output for this operation was measured at 119 kg/m²/hour (24.5 lb/ft²/hour). The energy requirement was 1307 cal/kg (2850 BTU/lb) glass. The residence time in the furnace was about 12 hours.

Example 2

The example illustrates the preparation of a soluble silicate glass (3.22 $SiO_2$/$Na_2O$) by a preliminary and primitive embodiment of our invention. While this example demonstrates the concepts and the process steps of our invention, equipment limitations did not allow full realization of all the advantages that are inherent in our process when more refined equipment is used.

Raw material batches of 45.4 kg (100 lb) of sand and 24.8 kg (54.7 lb) of soda ash were blended for 3 minutes in a 170 l (6 ft³) paddle mixer. The batch was fed to a pug mill wherein it was mixed with sufficient dilute silicate solution to provide a damp mixture containing 7% water and 0.14% sodium silicate solids. After thorough mixing, the dampened material was fed to a Komark-Greaves roll briquetter within 3 minutes of addition of the silicate solution. The briquettes were compressed at 79.45 kg (1750 lb) roll separation pressure. This provides pillow-shaped structures measuring approximately 4.45 by 3.66 by 2.24 cm (1.75 by 1.44 by 0.88 in). The briquettes were screened (SWECO vibrating screen) to exclude any materials smaller than about 1.27 cm (0.50 in). The undersize material was recycled to the pug mill. The briquettes were free-flowing and had a compressive strength of about $15.10^3$ N/m² (22 lb/in²).

The briquettes were charged to a preheater by means that minimized the entrance of air with the briquettes. The preheater was about 183 cm (6 ft) tall with inside dimensions of 61.0 cm by 30.5 cm (2 ft by 1 ft) and was constructed of super-duty firebrick or equivalent castable refractory material. The discharge area or throat of the preheater was designed so that the toe of the briquette column was exposed to a minimum amount of energy radiating from the furnace. The briquettes were heated by forcing hot gases through the briquette pile. Discharging was accomplished by a push rod or other means of forcing the briquettes off the bottom of the preheater and into the throat of the preheater, from which they fell to the hearth.

The hearth was 323 cm (127 in.) in length with a width of 15.2 cm (6 in.) except for the briquette breakdown zone. This area, which was directly under the preheater throat, was 61.0 cm (24 in.) in length by 50.8 cm (20 in.) in width. The hearth narrowed from the 50.8 cm (20 in.) width of the breakdown zone to the 15.2 cm (6 in.) width of the melt-reaction zone within 20.3 cm (8 in.) so that the melt-reaction zone was 241 cm by 15.2 cm (95 in. by 6 in.). The hearth was sloped at 0.05 cm per cm for the first 254 cm (100 in.), including the breakdown zone. The last 68.6 cm (27 in.) of the hearth had no slope. This slope and configuration of the hearth were completely satisfactory, and the molten and mostly molten material flowed from the breakdown area to the discharge end without problem.

The hearth was fired with various combinations of gas-fired burners through the side wall to obtain the temperatures desired. Thermocouples and sampling ports were placed in various locations in the preheater and over the hearth, and a viewing port was placed at the discharge end of the furnace.

The briquettes were charged into the preheater, and diluted counter-flowing furnace gases were used to heat them. The briquettes were charged at various rates depending upon the pull rates of product glass desired. The briquettes were heated, and conditions were such that they had a residence time of 2-1/2 hours at temperatures of about 593 to 732°C (1100 to 1350°F). At these temperatures there was 3 to 5% prereaction of the silica prior to discharging.

The furnace was fired at about 1427°C (2600°F). The briquettes fell in a random manner onto the briquette breakdown zone. No piles of briquettes were observed at pull rates less than 152 kg/hr (334 lb/hr). Sufficient area of the hearth was uncovered to receive radiation, and the briquettes lost their morphology and flowed from the zone within 3 minutes. A continuous layer of molten material covered the 15.2 cm (6 in.) wide melt-reaction zone. This layer was proportional to the calculated pull rate, being 1.0 cm (0.40 in.) at 58.6 kg/hr (129 lb/hr), 1.1 cm (0.44 in.) at 85.4 kg/hr (188 lb/hr), determined by placing a tracer in the molten glass and observing it upon drawing the product. The total residence time on the hearth was about 13 minutes. The product glass discharged at temperatures between 1188 and 1218°C (2170 and 2225°F). Actual pull rates of 52.7 to 151.6 kg/hr (116 to 334 lb/hr) were achieved using this equipment, so that production of 3.22 $SiO_2/Na_2O$ glass of commercial quality was 70.8 to 205 kg/m²/hr (14.5 to 42 lb/ft²/hr). While these rates do not entirely indicate vastly improved production rates over the prior-art results as illustrated in Example 1, they are encouraging because of the primitive nature of the equipment used.

Example 3

An insoluble soda-lime glass batch was processed in the same manner as described in Example 2. The composition of this material was as follows:

| | |
|---|---|
| Sand | 100.0 lb |
| Soda Ash | 32.0 |
| Dolomite | 24.0 |
| Nepheline Syenite | 4.0 |
| Sodium Sulfate | 0.6 |

The glass product was discharged from the hearth at an average steady-state rate of 85.8 kg/hr (189 lb/hr) for 4 hours.

Example 4

A computer simulation of the glass-making process of our invention was carried out for a soluble sodium silicate glass. The sand and soda ash batch was designed to produce glass of 1.8 or 2.0 moles of $SiO_2$ per mole of $Na_2O$ and the briquetting was done as described in Example 2. The briquettes were charged to a double-sided preheater, each side of which is 61 cm×61 cm (2 ft×2 ft) and contains a uniform packed column of briquettes. The briquettes rest on the refractory bottom of the preheater structure with the toe of the column forming a 35° angle in facing the preheater throat. Hydraulic pushers force the briquettes into the preheater throat, and they fall by gravity onto the directed-flow hearth. The strokes of the hydraulic pushers alternate between the two sides of the preheater, helping to achieve the uniform, but discontinuous, layer of briquettes required in the briquette breakdown area which is the first 122 cm (4 ft) of the 366 cm (12 ft) hearth. The hearth is 9.3 m² (100 ft²) with a slope of 2° from the breakdown area to the draw hole. The preheater throat is 61.0 cm (2 ft) inside the end wall of the hearth so that the briquettes do not contact the refractories as they fall to the hearth. Firing is carried out using natural gas burners positioned in the end wall at the charging end; the temperature of the combustion products is 1371°C (2500°F). The product glass is drawn from the hearth at 1816 kg/hr (4000 lbs/hr) at

1093°C (2000°F). The products of combustion are drawn from the discharge end of the hearth at 1371°C (2500°F) and directed through a metallic recuperator so that some heat can be used to preheat the combustion air to the burner. The combustion air is heated to about 538°C (1000°F). The hot off-gases from the metallic recuperator are further diluted to 816±28°C (1500±50°F) with ambient air. This hot gas stream is passed through the briquette columns, and the briquettes heated to about 788°C (1450°F) before charging them to the hearth. The briquettes require 30 min to pass through the preheater. The passage through the hearth requires about 10 minutes. After completing the computer simulation, it was found that production of the product requires about 723 kcal/g (1300 BTU/lb) of glass. The computer model is based on a completely reacted glass with no insolubles.

## Example 5

The experiment illustrated in this example first indicated that unreacted silica relics of the briquettes are wetted by the liquid phase that forms upon loss of morphology by the briquettes. Briquettes of sand and soda ash with 3.22 pbw of $SiO_2$ per pbw of $Na_2O$ were prepared as described in Example 2. These briquettes were heated in a flow of 871°C (1600°F) gas to between 788 and 816°C (1450 and 1500°F in about 1 hr. This temperature was maintained for 2 hours. The briquettes were placed in a furnace at 1260°C (2300°F). In 3.5 min the briquettes had lost their morphology and were removed from the furnace and allowed to cool. Upon fracturing the glass, it was found that the unreacted relics were separated by and completely surrounded by glass. This structure, a matrix of glass with sand, indicated that the unreacted material is wetted by the molten glass.

## Example 6

This example also illustrates that the unreacted material is wetted by the melted liquid phase and that such wetted material flows with the liquid phase. Briquettes of sand and soda ash containing 2.5 pbw of $SiO_2$ per pbw of $Na_2O$ were prepared as described in Example 2 and preheated as described in Example 5. The briquettes were then placed in a furnace in such a manner that the liquids formed would flow. The briquettes were observed to glow and the surfaces to boil and bubble because of degassing. Within 3 min the briquettes collapsed (lost morphology) and the newly formed liquid flowed away. Upon cooling the furnace, no deposits of unreacted sand were found where the briquettes had been placed, indicating that the unreacted material had been carried away in the liquid phase.

## Claims

1. A directed flow, thin layer glass fusion process comprising the steps of:
(a) blending particulate glassmaking raw materials to form a homogeneous mixture, at least one of said raw materials having a cation-to-oxygen bond strength greater than 80 kcal/mole;
(b) forming said mixture into discrete compacted bodies of enduring homogeneous character;
(c) heating said bodies at a temperature and for a period of time sufficient to raise their temperature significantly while avoiding surface melting or sticking;
(d) charging the discrete heated bodies to a breakdown area of a refractory hearth in a furnace, said hearth being heated by a source of radiant energy, said bodies resting upon the refractories comprising the hearth, the temperature within the furnace being sufficient to cause the discrete bodies to lose morphology in less than 15 minutes by forming a molten phase, said hearth and breakdown area being so constructed that the molten material forms a thin layer flowing in a direction away from the breakdown area to a melt-reaction area, said molten phase wetting any unmelted unreacted raw material so that it is carred by said flow, thereby maintaining homogeneity;
(e) heating the melt-reaction area of the hearth with a source of radiant energy, and maintaining the conditions such that a portion of the radiant energy is transmitted through the flowing molten thin layer to heat the underlying refractory hearth, so that the said thin layer absorbs heat from the hearth refractories in addition to absorbing radiant energy to complete melting and reacting, thereby forming a molten glass; and
(f) recovering the molten glass by drawing it from the hearth, the period of residence in the hearth being sufficient to accomplish essentially complete reaction of the raw materials.

2. The process of claim 1 wherein in said step (a) the glassmaking raw materials are alkali metal carbonate and silica sand in such proportion that the glass formed contains 0.9 to 5.0 moles of $SiO_2$ per mole of $M_2O$ wherein M is an alkali metal.

3. The process of claim 2 wherein the alkali metal carbonate is soda ash and the glass contains 1.5 to 4.5 moles of $SiO_2$ per mole of $Na_2O$.

4. The process of any of claims 1 to 3 wherein the raw material mixture obtained in said step (a) is blended with a liquid binder and compressed or compacted at 34.4 to 206.3 bar (500 to 3,000 psi) to form discrete bodies.

5. The process of any of claims 1 to 4 wherein the discrete bodies are contacted with gas at a temperature of 704 to 843°C (1,300 to 1,550°F).

6. The process of any of claims 1 to 5 wherein the discrete bodies are maintained at a high temperature for a period sufficient to achieve up to 60% reaction of the raw materials.

7. The process of claim 1 characterized by blending said homogeneous mixture obtained in said step (a) with 3 to 18 pbw of a liquid binder for each 100 pbw of raw material mixture, thereby forming a dampened mixture; compressing or compacting in said step (b) the

above-mentioned dampened mixture at 68.75 to 687.5 bar (1,000 to 10,000 psi) actual forming pressure to form discrete briquettes;

heating in said step (c) the briquettes by contact with a gas at 704 to 843°C (1,300 to 1,550°F) for a period of time sufficient to raise the briquettes to a temperature of 449 to 788°C (840 to 1,450°F);

charging in said step (d) the discrete heated briquettes to a breakdown zone of a refractory hearth heated by a source of radiant energy to a temperature of 1,204 to 1,482°C (2,200 to 2,700°F); and

said recovery in said step (e) being 30 min or less from the time the briquettes were charged to the hearth.

8. The process of claim 7 wherein the glass-making raw materials are alkali metal carbonate and silica sand in such proportions that the glass formed has 0.9 to 5.0 moles of $SiO_2$ per mole of $M_2O$ wherein M is an alkali metal.

9. The process of claim 8 wherein the alkali metal carbonate is soda ash and the glass formed has 1.5 to 4.5 moles of $SiO_2$ per mole of $Na_2O$.

10. The process of claim 7 wherein the liquid binder is water or an aqueous solution of a raw material.

11. The process of claim 10 wherein the liquid binder is an aqueous solution of an alkali metal hydroxide, an alkali metal carbonate or an alkali metal silicate.

12. The process of either claims 7 or 9 wherein the briquettes are heated for a sufficient time to achieve up to a 60% reaction of the raw materials.

13. The process of either claims 7 or 9 wherein the briquette breakdown zone comprises 10 to 80% of the hearth area, 10 to 60% of the briquette breakdown zone is maintained free of briquettes, and the melt-reaction zone comprises 20 to 90% of the hearth area and the entire area is covered with a flowing thin layer of molten material.

14. The process of claim 8 wherein the glass formed contains less than 2.5 moles of $SiO_2$ per mole of $M_2O$ and the residence time in the hearth is less than 20 minutes.

15. The process of claim 1 characterized by blending in said step (a) alkali metal carbonate and silica sand to form a homogeneous mixture, the proportions being such that the glass formed has 0.9 to 5.0 moles of $SiO_2$ per mole of $M_2O$ wherein M is an alkali metal;

blending the above-mentioned homogeneous mixture with 3 to 18 pbw of water or aqueous solutions of alkali metal hydroxides, alkali metal carbonates or alkali metal silicates for each 100 pbw of the homogeneous mixture;

compressing or compacting in said step (b) said dampened mixture at 68.75 to 687.5 bar (1,000 to 10,000 psi) actual forming pressure to form discrete briquettes of enduring homogeneous character;

heating in said step (c) the briquettes by contact with a gas at 704 to 843°C (1,300 to 1,550°F) for a period of time sufficient to raise the temperature of the briquettes to 449 to 788°C (840 to 1,450°F);

charging in said step (d) the heated discrete briquettes to the breakdown zone of a refractory hearth heated to a temperature of 1,204 to 1,482°C (2,200 to 2,700°F) the charging being controlled so that 10 to 60% of the hearth area of the breakdown zone is maintained free of briquettes; and

heating in said step (e) the melt-reaction zone that comprises 20 to 90% of the hearth area with a source of radiant energy.

16. The process of claim 15 characterized by blending in said step (a) sand and soda ash to form a homogeneous mixture, the proportions being such that the glass formed has 0.9 to 5.0 moles of $SiO_2$ per mole of $Na_2O$; and

blending the above-mentioned homogeneous mixture with 3 to 18 pbw of water or aqueous sodium silicate solution for each 100 pbw of the homogeneous mixture.

17. The process of claim 16 wherein the dampened raw material mixture contains 1.0 to 12% water and up to 5% silicate solids derived from the sodium silicate solution.

18. The process of claim 16 wherein the dampened mixture contains 3.6 to 9% water and up to 2% silicate solids from the sodium silicate solution.

19. The process of claim 16 wherein the dampened raw material mixture is compacted using a roll press briquetter with 34.4 to 82.5 bar (500 to 1,200 psi) roll separating pressure translating to 137.5 to 342.8 bar (2,000 to 5,000 psi) actual forming pressure, said compaction taking place within 1.5 min of preparation of the dampened mixture.

20. The process of claim 16 wherein the radiant energy source is the combustion of natural gas or oil, and the diluted products of this combustion are used to heat the briquettes.

21. The process of claim 16 wherein the briquettes are heated for a sufficient time to achieve reaction of up to 60% of the raw materials before charging to the hearth.

22. The process of claim 16 wherein the briquettes lose their morphology within 3 minutes.

23. The process of claim 16 wherein the directed flow, thin layer is established by constructing the hearth so that it slopes from the briquette breakdown zone through the melt-reaction zone to the draw port.

24. The process of claim 16 wherein the time between the charging of the briquettes to the hearth and drawing of the glass is less than 15 minutes.

25. The process of claim 24 wherein the time is less than 10 minutes.

26. The process of claim 16 wherein the glass formed contains 1.5 to 4.5 moles of $SiO_2$ per mole of $Na_2O$.

27. The process of claim 16 wherein the glass formed contains less than 2.5 moles of $SiO_2$ per mole of $Na_2O$ qnd the residence time in the hearth is less than 20 minutes.

28. The process of claim 1 characterized by blending in said step (a) particulate glass-making raw materials to form a homogeneous mixture, at least one of said raw materials being a glass network former and having a cation-to-oxygen bond strength greater than 80 kcal/mol, the remaining raw materials being modifiers and intermediates.

29. The process of claim 28 wherein the glass network former can be:

| | |
|---|---|
| $SiO_2$ | $Sb_2O_3$ |
| $B_2O_3$ | $Sb_2O_5$ |
| $P_2O_5$ | $Al^{(IV)}_2O_3$ |
| $P_2O_3$ | |

or mixtures thereof; the modifiers being $Na_2O$, $K_2O$, $Li_2O$, $Rb_2O$, $SnO_2$, $PbO_2$, $MgO$, $PbO$, $BaO$ and $CaO$, and the intermediates being $TiO_2$, $ZnO$, $PbO$, $Al_2^{(VI)}O_3$ and $ZrO_2$.

30. The process of either of claims 28 or 29 wherein the raw material is mixed with sufficient binder to provide a dampened mixture containing 3 to 5% water and up to 3% silicate solids and compacted at 137.5 to 412.5 bar (2,000 to 6,000 psi) to form briquettes.

31. The process of either of claims 29 or 30 wherein the briquettes are heated in step (c) with a gas at a temperature up to 927°C (1,700°F) for a period sufficient to heat said briquettes to 449 to 899°C (840 to 1,650°F).

32. The process of either of claims 29 or 30 wherein the briquette breakdown zone is heated at 1,204 to 1,482°C (2,200 to 2,700°F) and the charging of said briquettes being controlled to maintain 10 to 60% of the zone free of briquettes.

33. The process of either of claims 29 or 30 wherein the molten glass product is drawn into a heated refining tank.

## Patentansprüche

1. Dünnschicht-Glasschmelzverfahren mit gerichtetem Fluß, gekennzeichnet durch die Stufen:

a) Vermischung von teilchenförmigen Glasherstellungsrohmaterialien zur Bildung eines homogenen Gemisches, wobei mindestens eines der genannten Rohmaterialien eine Kation-zu-Sauerstoff-Bindungsfestigkeit von mehr als 80 kcal/Mol hat;

b) Verformung des genannten Gemisches zu diskreten kompaktierten Körpern mit andauerndem homogenen Charakter;

c) Erhitzen der genannten Körper auf eine Temperatur und über einen ausreichenden Zeitraum, daß ihre Temperatur signifikant unter Vermeidung eines Oberflächenschmelzens oder -klebens erhöht wird;

d) Beschickung der diskreten erhitzten Körper in einen Zerlegungsbereich eines feuerfesten Feuerraums in einem Ofen, wobei der Feuerraum durch eine Quelle von Strahlungsenergie erhitzt wird, wobei die genannten Körper auf den feuerfesten Materialien aufliegen, die den Feuerraum umfassen, wobei die Temperatur innerhalb des Feuerraums ausreichend ist, daß bewirkt wird, daß die diskreten Körper ihre Morphologie in weniger als 15 min durch Bildung einer geschmolzenen Phase verlieren, wobei der genannte Feuerraum und der Zerlegungsbereich so konstruiert sind, daß das geschmolzene Material eine dünne Schicht bildet, die in einer Richtung von dem Zerlegungsbereich weg in einen Schmelzreaktionsbereich fließt, wobei die geschmolzene Phase irgendein nichtgeschmolzenes nichtreagiertes Rohmaterial benetzt, so daß es von dem genannten Fluß getragen wird, wodurch die Homogenität aufrechterhalten wird;

e) den Schmelzreaktionsbereich des Feuerraums mit einer Quelle von Strahlungsenergie erhitzt und solche Bedingungen aufrechterhält, daß ein Teil der Strahlungsenergie durch die fließende geschmolzene dünne Schicht geleitet wird, um den darunterliegenden feuerfesten Feuerraum zu erhitzen, so daß die genannte dünne Schicht zusätzlich zu der Absorption von Strahlungsenergie Hitze von den feuerfesten Materialien des Feuerraums absorbiert, um das Schmelzen und Reagieren zu vervollständigen, wodurch ein geschmolzenes Glas gebildet wird, und

f) Gewinnung des geschmolzenen Glases durch Abziehen aus dem Feuerraum, wobei die verweilzeit in dem Feuerraum ausreichend ist, daß eine im wesentlichen vollständige umsetzung der Rohmaterialien erzielt wird.

2. Verfahren nach Anspruch 1, dadurch gekennzeichnet, daß in der genannten Stufe a) die Glasherstellungsrohmaterialien Alkalimetallcarbonat und Kieselsäuresand in einem solchen Verhältnis sind, daß das gebildete Glas 0,9 bis 5,0 Mol $SiO_2$ pro Mol $M_2O$ enthält, wobei M ein Alkalimetall ist.

3. Verfahren nach Anspruch 2, dadurch gekennzeichnet, daß das Alkalicarbonat Natriumcarbonat ist, und daß das Glas 1,5 bis 4,5 Mol $SiO_2$ pro Mol $Na_2O$ enthält.

4. Verfahren nach einem der Ansprüche 1 bis 3, dadurch gekennzeichnet, daß man das in der genannten Stufe a) erhaltene Rohmaterialgemisch mit einem flüssigen Bindemittel vermischt und bei 34,4 bis 206,3 bar (500 bis 3000 psi) zur Bildung von diskreten Körpern verpreßt oder kompaktiert.

5. Verfahren nach einem der Ansprüche 1 bis 4, dadurch gekennzeichnet, daß man die diskreten Körper mit Gas bei einer Temperatur von 704 bis 843°C (1300 bis 1550°F) kontaktiert.

6. Verfahren nach einem der Ansprüche 1 bis 5, dadurch gekennzeichnet, daß man die diskreten Körper auf einer hohen Temperatur über einen genügenden Zeitraum hält, daß bis zu 60% Reaktion der Rohmaterialien erhalten wird.

7. Verfahren nach Anspruch 1, dadurch gekennzeichnet, daß man das in der genannten Stufe a) erhaltene homogene Gemisch mit 3 bis 18 Gew.-Teilen eines flüssigen Bindemittels für jeweils 100 Gew.-Teile des Rohmaterialgemisches vermengt, wodurch ein befeuchtetes Gemisch gebildet wird,

in der genannten Stufe b) das obengenannte befeuchtete Gemisch bei einem tatsächlichen Verformungsdruck von 68,75 bis 687,5 bar (1000 bis 10000 psi) zur Bildung von diskreten Preßlingen verpreßt oder kompaktiert,

in der genannten Stufe c) die Preßlinge durch Kontakt mit einem Gas bei 704 bis 843°C (1300 bis 1550°F) über einen genügenden Zeitraum, daß die Preßlinge auf eine Temperatur von 449 bis 788°C (840 bis 1450°F) erhöht werden, erhitzt,

in der genannten Stufe d) die diskreten erhitzten Preßlinge in einen Zerlegungsbereich eines feuerfesten Feuerraums einbringt, der durch eine Quelle von Strahlungsenergie auf eine Temperatur von 1204 bis 1482°C (2200 bis 2700°F) erhitzt wird,

und daß die genannte Gewinnung in der genannten Stufe e) 30 min oder weniger vom Zeitpunkt der Einbringung der Preßlinge in den Feuerraum beträgt.

8. Verfahren nach Anspruch 7, dadurch gekennzeichnet, daß die Glasherstellungsrohmaterialien Alkalimetallcarbonat und Kieselsäuresand in solchen Verhältnissen sind, daß das gebildete Glas 0,9 bis 5,0 Mol.$SiO_2$ pro Mol $M_2O$ besitzt, worin M ein Alkalimetall ist.

9. Verfahren nach Anspruch 8, dadurch gekennzeichnet, daß das Alkalimetallcarbonat Natriumcarbonat ist, und daß das gebildete Glas 1,5 bis 4,5 Mol $SiO_2$ pro Mol $Na_2O$ hat.

10. Verfahren nach Anspruch 7, dadurch gekennzeichnet, daß das flüssige Bindemittel Wasser oder eine wäßrige Lösung eines Rohmaterials ist.

11. Verfahren nach Anspruch 10, dadurch gekennzeichnet, daß das flüssige Bindemittel eine wäßrige Lösung eines Alkalimetallhydroxids, eines Alkalimetallcarbonats oder eines Alkalimetallsilicats ist.

12. Verfahren nach einem der Ansprüche 7 oder 9, dadurch gekennzeichnet, daß man die Preßlinge über einen genügenden Zeitraum erhitzt, daß bis zu 60% Reaktion der Rohmaterialien erreicht wird.

13. Verfahren nach einem der Ansprüche 7 oder 9, dadurch gekennzeichnet, daß die Zone der Preßlingzerlegung 10 bis 80% des Feuerraumbereichs umfaßt, daß 10 bis 60% der Preßlingzerlegungszone von Preßlingen freigehalten werden und daß die Schmelzreaktionszone 20 bis 90% des Feuerraumbereiches umfaßt und daß der gesamte Bereich von einer fließenden dünnen Schicht von geschmolzenem Material bedeckt ist.

14. Verfahren nach Anspruch 8, dadurch gekennzeichnet, daß das gebildete Glas weniger als 2,5 Mol $SiO_2$ pro Mol $M_2O$ enthält und daß die Verweilzeit in dem Feuerraum weniger als 20 min beträgt.

15. Verfahren nach Anspruch 1, dadurch gekennzeichnet, daß man in der genannten Stufe a) Alkalimetallcarbonat und Kieselsäuresand unter Bildung eines homogenen Gemisches vermischt, wobei die Verhältnismengen so sind, daß das gebildete Glas 0,9 bis 5,9 Mol $SiO_2$ pro Mol $M_2O$ aufweist, wobei M ein Alkalimetall ist,

das obengenannte homogene Gemisch mit 3 bis 18 Gew.-Teilen Wasser oder von wäßrigen Lösungen von Alkalimetallhydroxiden, Alkalimetallcarbonaten oder Alkalimetallsilicaten für jeweils 100 Gew.-Teile des homogenen Gemisches vermischt,

in der genannten Stufe b) das genannte befeuchtete Gemisch bei einem tatsächlichen Verformungsdruck von 68,75 bis 687,5 bar (1000 bis 10000 psi) verpreßt oder kompaktiert, um diskrete Preßlinge mit andauerndem homogenen Charakter zu bilden,

in der genannten Stufe c) die Preßlinge durch Kontakt mit einem Gas bei 704 bis 843°C (1300 bis 1550°F) über einen genügenden Zeitraum erhitzt, daß die Temperatur der Preßlinge auf 449 bis 788°C (840 bis 1450°F) erhöht wird,

in der genannten Stufe d) die erhitzten diskreten Preßlinge in die Zerlegungszone eines feuerfesten Feuerraums einbringt welcher auf eine Temperatur von 1204 bis 1482°C (2200 bis 2700°F) erhitzt wird, wobei die Einbringung so kontrolliert wird, daß 10 bis 60% des Feuerraumbereichs der Zerlegungszone von Preßlingen freigehalten werden, und daß man

in der genannten Stufe e) die Schmelzreaktionszone, die 20 bis 90% des Feuerraumbereiches umfaßt, mit einer Quelle von Strahlungsenergie erhitzt.

16. Verfahren nach Anspruch 15, dadurch gekennzeichnet, daß man in der genannten Stufe a) Sand und Natriumcarbonat unter Bildung eines homogenen Gemisches vermengt, wobei die Verhältnisse so sind, daß das gebildete Glas 0,9 bis 5,0 Mol $SiO_2$ pro Mol $Na_2O$ besitzt, und daß man das obengenannte homogene Gemisch mit 3 bis 18 Gew.-Teilen Wasser oder wäßriger Natriumsilicatlösung für jeweils 100 Gew.-Teile des homogenen Gemisches vermengt.

17. Verfahren nach Anspruch 16, dadurch gekennzeichnet, daß das befeuchtete Rohmaterialgemisch 1,0 bis 12% Wasser und bis zu 5% Silicatfeststoffe, die von der Natriumsilicatlösung herrühren, enthält.

18. Verfahren nach Anspruch 16, dadurch gekennzeichnet, daß das befeuchtete Gemisch 3,5 bis 9% Wasser und bis zu 2% Silicatfeststoffe aus der Natriumsilicatlösung enthält.

19. Verfahren nach Anspruch 16, dadurch gekennzeichnet, daß man das befeuchtete Rohmaterialgemisch unter Verwendung einer Walzenpreßvorrichtung mit einem Walztrenndruck von 34,4 bis 82,5 bar (500 bis 1200 psi), der einem Verformungsdruck von 137,5 bis 342,8 bar (2000 bis 5000 psi) entspricht, kompaktiert, wobei das genannte Kompaktieren innerhalb von 1,5 min von der Herstellung des befeuchteten Gemisches erfolgt.

20. Verfahren nach Anspruch 16, dadurch gekennzeichnet, daß die Quelle für die Strahlungsenergie die Verbrennung von Erdgas oder Öl ist, und daß man die verdünnten Produkte dieser Verbrennung zur Erhitzung der Preßlinge verwendet.

21. Verfahren nach Anspruch 16, dadurch gekennzeichnet, daß man die Preßlinge über einen genügenden Zeitraum erhitzt, daß eine Reaktion von bis zu 60% der Rohmaterialien vor der Beschickung in den Feuerraum erhalten wird.

22. Verfahren nach Anspruch 16, dadurch gekennzeichnet, daß die Preßlinge ihre Morphologie innerhalb von 3 min verlieren.

23. Verfahren nach Anspruch 16, dadurch gekennzeichnet, daß man die dünne Schicht mit gerichtetem Fluß in der Weise herstellt, daß man den Feuerraum so konstruiert, daß er sich von der Preßlingszerlegungszone durch die Schmelzreaktionszone zu der Abziehungsöffnung neigt.

24. Verfahren nach Anspruch 16, dadurch gekennzeichnet, daß die Zeitspanne zwischen der Einbringung der Preßlinge in den Feuerraum und dem Abziehen des Glases weniger als 15 min beträgt.

25. Verfahren nach Anspruch 24, dadurch gekennzeichnet, daß die Zeitspanne weniger als 10 min beträgt.

26. Verfahren nach Anspruch 16, dadurch gekennzeichnet, daß das gebildete Glas 1,5 bis 4,5 Mol $SiO_2$ pro Mol $Na_2O$ enthält.

27. Verfahren nach Anspruch 16, dadurch gekennzeichnet, daß das gebildete Glas weniger als 2,5 Mol $SiO_2$ pro Mol $Na_2O$ enthält, und daß die Verweilzeit in dem Feuerraum weniger als 20 min beträgt.

28. Verfahren nach Anspruch 1, dadurch gekennzeichnet, daß man in der genannten Stufe a) teilchenförmige Glasherstellungsrohmaterialien unter Bildung eines homogenen Gemisches vermischt, wobei mindestens eines der genannten Rohmaterialien ein Glasnetzwerkbildungsmittel ist und eine Kation-zu-Sauerstoff - Bindungsfestigkeit von mehr als 80 kcal/mol aufweist, wobei die restlichen Rohmaterialien Modifizierungsmittel und Zwischenprodukte sind.

29. Verfahren nach Anspruch 28, dadurch gekennzeichnet, daß das Glasnetzwerkbildungsmittel

| | |
|---|---|
| $SiO_2$ | $Sb_2O_3$ |
| $B_2O_3$ | $Sb_2O_5$ |
| $P_2O_5$ | $Al^{(IV)}{}_2O_3$ |
| $P_2O_3$ | |

oder Gemische davon sein kann, daß Modifizierungsmittel $Na_2O$, $K_2O$, $Li_2O$, $Rb_2O$, $SnO_2$, $PbO_2$, $MgO$, $PbO$, $BaO$ und $CaO$ sind, und daß die Zwischenprodukte $TiO_2$, $ZnO$, $PbO$, $Al_2^{(VI)}O_3$ und $ZrO_2$ sind.

30. Verfahren nach einem der Ansprüche 28 oder 29, dadurch gekennzeichnet, daß man das Rohmaterial mit genügend Bindemittel vermischt, um ein befeuchtetes Gemisch zu erhalten, welches 3 bis 5% Wasser und bis zu 3% Silicatfeststoffe enthält, und daß man dieses bei 137,5 bis 412,5 bar (2000 bis 6000 psi) under Bildung von Preßlingen kompaktiert.

31. Verfahren nach einem der Ansprüche 29 oder 30, dadurch gekennzeichnet, daß man die Preßlinge in der Stufe c) mit einem Gas bei einer Temperatur von bis zu 927°C (1700°F) über einen genügenden Zeitraum erhitzt, daß die genannten Preßlinge auf 449 bis 899°C (840 bis 1650°F) erhitzt werden.

32. Verfahren nach einem der Ansprüche 29 oder 30, dadurch gekennzeichnet, daß man die Preßlingszerlegungszone auf 1204 bis 1482°C (2200 bis 2700°F) erhitzt, und daß man die Beschickung der genannten Preßlinge so kontrolliert, daß 10 bis 60% der Zone von Preßlingen freigehalten werden.

33. Verfahren nach einem der Ansprüche 29 oder 30, dadurch gekennzeichnet, daß man das geschmolzene Glasprodukt in einen erhitzten Raffinierungstank abzieht.

## Revendications

1. Procédé de fusion de verre en couches minces et à écoulement dirigé comprenant les étapès de:

(a) mélange de matières premières particulaires pour le verre de façon à former un mélange homogène, l'une de ces matières premières au moins ayant une résistance de liaison cation-à-oxygène supérieure à 80 kcal/mole;

(b) mise de ce mélange sous forme de corps compactés discrets ayant un caractère homogène durable;

(c) chauffage de ces corps à une température et pendant une période de temps suffisantes pour élever suffisamment leur température tout en évitant une adhérence ou une fusion superficielle;

(d) chargement des corps chauffés discrets dans une zone de déversement d'un foyer réfractaire dans un four, ce foyer étant chauffé par une source d'énergie de rayonnement ces corps reposant sur les réfractaires constituant le foyer, la température à l'intérieur du four étant suffisante pour provoquer la perte de la morphologie des corps discrets en moins de 15 minutes par formation d'une phase fondue, ce foyer et cette zone de déversement étant construits de telle sorte que la matière fondue forme une mince couche qui s'écoule dans une direction s'éloignant de la zone de déversement vers une zone de réaction à l'état fondu, cette phase fondue mouillant une quelconque matière première n'ayant pas réagi et non fondue de façon à l'entraîner avec cet écoulement et maintenir ainsi l'homogénéité;

(e) chauffage de la zone de réaction à l'état fondu du foyer avec une source d'énergie de rayonnement et maintien de conditions telles qu'une portion de l'énergie de rayonnement est transmise à travers la couche mince fondue qui s'écoule pour chauffer le foyer réfractaire sous-jacent, si bien que la couche mince absorbe la chaleur des réfractaires du foyer tout en absorbant l'énergie de rayonnement pour achever la fusion et la réaction, formant ainsi un verre fondu; et

(f) récupération du verre fondu par étirage depuis le foyer, la période de séjour dans le foyer étant suffisante pour accomplir une réaction essentiellement complète des matières premières.

2. Procédé selon la revendication 1, dans lequel, dans l'étape (a) les matières premières pour le verre sont un carbonate de métal alcalin et un sable de silice en des proportions telles que le verre formé contienne (0,9 à 5,0 moles de $SiO_2$ par mole de $M_2O$, où M est un métal alcalin.

3. Procédé selon la revendication 2, dans lequel le carbonate de métal alcalin est du carbonate neutre de sodium et le verre contient 1,5 à 4,5 moles de $SiO_2$ par mole de $Na_2O$.

4. Procédé selon l'une quelconque des revendications 1 à 3, dans lequel le mélange de matières premières obtenu dans l'étape (a) est mélangé à un liant liquide et comprimé ou compacté a 34,4 à 206,3 bars (500 à 3000 psi) pour former des corps discrets.

5. Procédé selon l'une quelconque des revendications 1 à 4, dans lequel les corps discrets sont mis en contact avec un gaz à une température de 704 à 843°C (1300 à 1550°F).

6. Procédé selon l'une quelconque des revendications 1 à 5, dans lequel les corps discrets sont maintenus à une température élevée pendant une période suffisante pour faire réagir jusqu'à 60% des matières premières.

7. Procédé selon la revendication 1, caractérisé par

le mélange du mélange homogène obtenu dans l'étape (a) avec 3 à 18 parties en poids d'un liant liquide pour 100 parties en poids de mélange de matières premières, formant ainsi un mélange humidifié;

la compression ou le compactage dans l'étape (b) du mélange humidifié mentionné plus haut à une pression de formation réelle de 68,75 à 687,5 bars (1000 à 10000 psi) pour former des briquettes discrètes;

le chauffage dans l'étape (c) des briquettes par contact avec un gaz à 704—843°C (1300 à 1550°F) pendant une période de temps suffisante pour élever les briquettes à une température de 449 à 788°C (840 à 1450°F);

le chargement dans l'étape (d) des briquettes discrètes chauffées dans une zone de déversement d'un foyer réfractaire chauffé par une source d'énergie de rayonnement à une température de 1204 à 1482°C (220 à 2700°F); et

la récupération dans cette étape (e) qui a lieu 30 minutes ou moins après le moment où les briquettes ont été chargées dans le foyer.

8. Procédé selon la revendication 7, dans lequel les matières premières du verre sont du carbonate de métal alcalin et du sable de silice en des proportions telles que le verre formé a 0,9 à 5,0 moles de $SiO_2$ par mole de $M_2O$, où M est un métal alcalin.

9. Procédé selon la revendication 8, dans lequel le carbonate de métal alcalin est le carbonate neutre de sodium et le verre formé a 1,5 à 4,5 moles de $SiO_2$ par mole de $Na_2O$.

10. Procédé selon la revendication 7, dans lequel le liant liquide est de l'eau ou une solution aqueuse d'une matière première.

11. Procédé selon la revendication 10, dans lequel le liant liquide est une solution aqueuse d'un hydroxyde de métal alcalin, d'un carbonate de métal alcalin ou d'un silicate de métal alcalin.

12. Procédé selon l'une des revendications 7 ou 9, dans lequel les briquettes sont chauffées pendant un temps suffisant pour faire réagir jusqu'à 60% des matières premières.

13. Procédé selon l'une des revendications 7 ou 9, dans lequel la zone de déversement des briquettes constitue 10 à 80% de la zone du foyer, 10 à 60% de la zone de déversement des briquettes sont maintenus sans briquettes, et la zone de réaction à l'état fondu représente 20 à 90% de l'aire du foyer et l'aire totale est recouverte d'une mince couche de matière fondue qui s'écoule.

14. Procédé selon la revendication 8, dans lequel le verre formé contient moins de 2,5 moles de $SiO_2$ par mole de $M_2O$ et la durée de séjour dans le foyer est inférieure à 20 minutes.

15. Procédé selon la revendication 1, caractérisé par le mélange dans l'étape (a) du carbonate de métal alcalin et du sable de silice pour former un mélange homogène, les proportions étant telles que le verre formé a 0,9 à 5,0 moles de $SiO_2$ par mole de $M_2O$, où M est un métal alcalin;

le mélange du mélange homogène mentionné plus haut avec 3 à 18 parties en poids d'eau ou de solutions aqueuses d'hydroxydes de métal alcalin, de carbonate de métal alcalin ou de silicates de métal alcalin pour 100 parties en poids du mélange homogène;

la compression ou le compactage dans l'étape (b) de ce mélange humidifié à une pression de formation réelle de 68,75 à 687,5 bars (1000 à 10000 psi) pour former des briquettes discrètes ayant un caractère homogène durable;

le chauffage dans l'étape (c) des briquettes par contact avec un gaz à 704—843°C (1300 à 1550°F) pendant une période de temps suffisante pour élever la température des briquettes de 449 à 788°C (840 à 1450°F);

le chargement dans l'étape (d) des briquettes discrètes chauffées dans la zone de déversement d'un foyer réfractaire chauffé à une température de 1204 à 1482°C (2200 à 2700°F), le chargement étant contrôlé de façon à maintenir sans briquettes de 10 à 60% de l'aire du foyer de la zone de déversement; et

le chauffage dans l'étape (e) de la zone de réaction à l'état fondu qui comprend 20 à 90% de l'aire du foyer, avec une source d'énergie de rayonnement.

16. Procédé selon la revendication 15, caractérisé par le mélange dans l'étape (a) de sable et de carbonate neutre de sodium pour former une mélange homogène, les proportions étant telles que le verre formé a 0,9 à 5,0 moles de $SiO_2$ par mole de $Na_2O$; et

le mélange du mélange homogène mentionné ci-dessus avec 3 à 18 parties en poids d'eau ou de solution aqueuse de silicate de sodium pour 100 parties en poids de mélange homogène.

17. Procédé selon la revendication 16, dans lequel le mélange humidifié de matières premières contient 1,0 à 12% d'eau et jusqu'à 5% de solides du type silicate dérivés de la solution de silicate de sodium.

18. Procédé selon la revendication 16, dans lequel le mélange humidifié contient 3,5 à 9% d'eau et jusqu'à 2% de solides du type silicate provenant de la solution de silicate de sodium.

19. Procédé selon la revendication 16, dans lequel le mélange humidifié de matières premières est compacté avec une briquetteuse à presse à cylindres avec une pression de séparation des cylindres de 34,4 à 82,5 bars (500 à 1200 psi) se traduisant par une pression de formation réelle de 137,5 à 342,8 bars (2000 à 5000 psi), ce compactage ayant lieu dans la minute et demie suivant la préparation du mélange humidifié.

20. Procédé selon la revendication 16, dans lequel la source d'énergie de rayonnement est la combustion de gaz naturel ou d'huile et où les produits dilués de cette combustion sont utilisés pour chauffer les briquettes.

21. Procédé selon la revendication 16, dans lequel les briquettes sont chauffées pendant période suffisante pour faire réagir jusqu'à 60% des matières premières avant le chargement dans le foyer.

22. Procédé selon la revendication 16, dans lequel les briquettes perdent leur morphologie en 3 minutes.

23. Procédé selon la revendication 16, dans lequel la couche mince à écoulement dirigé est établie par la construction du foyer de telle sorte qu'il s'incline depuis la zone de déversement des briquettes à travers la zone de réaction à l'état fondu jusqu'à l'orifice d'étirage.

24. Procédé selon la revendication 16, dans lequel le temps entre le chargement des briquettes dans le foyer et l'étirage du verre est inférieur à 15 minutes.

25. Procédé selon la revendication 24, dans lequel cette durée est inférieure à 10 minutes.

26. Procédé selon la revendication 16, dans lequel le verre formé contient 1,5 à 4,5 moles de $SiO_2$ par mole de $Na_2O$.

27. Procédé selon la revendication 16, dans lequel le verre formé contient moins de 2,5 moles de $SiO_2$ par mole de $Na_2O$ et la durée de séjour dans le foyer est inférieure à 20 minutes.

28. Procédé selon la revendication 1, caractérisé par

le mélange dans cette étape (a) de matières premières particulaires pour le verre de façon à former un mélange homogène, l'une au moins de ces matières premières étant une matière formant un réseau de verre et ayant une résistance de la liaison cation-à-oxygène supérieure à 80 kcal/mole, les matières premières restantes étant des agents de modification et des intermédiaires.

29. Procédé selon la revendication 28, dans lequel l'agent formant un réseau de verre peut être

| | |
|---|---|
| $SiO_2$ | $Sb_2O_3$ |
| $B_2O_3$ | $Sb_2O_5$ |
| $P_2O_5$ | $Al^{(IV)}_2O_3$ |
| $P_2O_3$ | |

ou leurs mélanges; les agents de modification étant $Na_2O$, $K_2O$, $Li_2O$, $Rb_2O$, $SnO_2$, $PbO_2$, $MgO$, $PbO$, $BaO$ et $CaO$, et les intermédiaires étant $TiO_2$, $ZnO$, $PbO$, $Al^{(VI)}_2O_3$ et $ZrO_2$.

30. Procédé selon la revendication 28 ou 29, dans lequel la matière première est mélangé avec suffisamment de liant pour fournir un mélange humidifié contenant 3 à 5% d'eau et jusqu'à 3% de solides de type silicate et est compactée à 137,5—412,5 bars (2000 à 6000 psi) pour former des briquettes.

31. Procédé selon la revendication 29 ou 30, dans lequel les briquettes sont chauffées dans l'étape (c) avec un gaz à une température allant jusqu'à 927°C (1700°F) pendant une période de temps suffisante pour chauffer ces briquettes à 449—899°C (840° à 1650°F).

32. Procédé selon l'une des revendications 29 ou 30, dans lequel la zone de déversement des briquettes est chauffée à 1204—1482°C (2200 à 2700°F) et le chargement des briquettes étant contrôlé de façon à maintenir 10 à 60% de la zone sans briquettes.

33. Procédé selon l'une des revendications 29 ou 30, dans lequel le verre fondu produit est étiré dans une cuve de raffinage.